(19) Europäisches Patentamt
European Patent Office
Office européen des brevets

(11) **EP 2 254 426 B1**

(12) **EUROPEAN PATENT SPECIFICATION**

(45) Date of publication and mention
of the grant of the patent:
**28.12.2011 Bulletin 2011/52**

(51) Int Cl.:
**A23L 1/00** (2006.01)        **A23L 1/035** (2006.01)
**A23G 3/52** (2006.01)        **A23G 9/46** (2006.01)

(21) Application number: **09724628.4**

(22) Date of filing: **25.03.2009**

(86) International application number:
**PCT/EP2009/053486**

(87) International publication number:
**WO 2009/118328 (01.10.2009 Gazette 2009/40)**

(54) **FOAMING AGENTS COMPRISING HYDROPHOBIN**

SCHAUMBILDNER MIT HYDROPHOBIN

AGENTS ANTIMOUSSE COMPRENANT DE L HYDROPHOBINE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.03.2008 EP 08153592**

(43) Date of publication of application:
**01.12.2010 Bulletin 2010/48**

(73) Proprietors:
• **Unilever PLC**
**London, Greater London EC4P 4BQ (GB)**
Designated Contracting States:
**CY GB IE MT**
• **Unilever N.V.**
**3013 AL Rotterdam (NL)**
Designated Contracting States:
**AT BE BG CH CZ DE DK EE ES FI FR GR HR HU IS IT LI LT LU LV MC MK NL NO PL PT RO SE SI SK TR**

(72) Inventors:
• **AUMAITRE, Elodie**
**Cambridge, Cambridgeshire CB4 1FZ (GB)**
• **FARRER, Donald, Bernard**
**Rushden, Northamptonshire NN10 6RY (GB)**
• **HEDGES, Nicholas, David**
**Bedford, Bedfordshire MK44 1LQ (GB)**
• **WILLIAMSON, Ann-Marie**
**Bedford, Bedfordshire MK44 1LQ (GB)**
• **WOLF, Bettina**
**Loughborough, Nottinghamshire LE12 6QG (GB)**

(74) Representative: **Hugot, Alain**
**Unilever Patent Group**
**Colworth House**
**Sharnbrook**
**Bedford, MK44 1LQ (GB)**

(56) References cited:
**EP-A- 0 336 817        WO-A-2007/039064**
**WO-A-2007/039066        WO-A-2007/087968**

• **COX AR ET AL: "Exceptional stability of food foams using class II hydrophobin HFBII" FOOD HYDROCOLLOIDS, [Online] 7 March 2008 (2008-03-07), XP002489874 doi: 10.1016/j.foodhyd.2008.03.001 [retrieved on 2008-07-29]**
• **MURRAY BS ET AL: "Foam stability: proteins and nanoparticles" CURRENT OPINION IN COLLOID & INTERFACE SCIENCE, vol. 9, no. 5, December 2004 (2004-12), pages 314-320, XP002533037**
• **HUNTER TN ET AL: "The role of particles in stabilising foams and emulsions" ADVANCES IN COLLOID AND INTERFACE SCIENCE, vol. 137, no. 2, 18 March 2008 (2008-03-18), XP002489875**
• **CP KELCO US INC: "Keltrol RD. Certificate of analysis" XP002533038 17.04.2007 Retrieved from the Internet: URL:http://www.biesterfeld.nazwa.pl/certyf ikaty/ 7B4815K.pdf>**

## Description

### Technical Field of the Invention

The present invention relates to hydrophobins and their use as foaming agents, for example in food products.

### Background to the Invention

EP 1626361 discloses that hydrophobins are very effective at creating and stabilizing foams, for example in aerated food products such as ice cream. However, a significant disadvantage of hydrophobins is that they are not currently readily available in large quantities, and moreover they are expensive.

### Brief Description of the Invention

Surprisingly, we have found that gelled particles which have a largest dimension of more than 0.1 $\mu$m and which are coated with hydrophobin are effective foaming agents, so that lower amounts of hydrophobin can be used without adversely affecting the foam formation and stabilization properties. The amount of hydrophobin required can be lowered by a factor of up to 10 times. Further advantages of the invention include:

- the gelled particles are easy to produce;
- a foam can be easily formed using the gelled particles coated with hydrophobin;
- the foam is very stable.

Accordingly, in a first aspect the present invention relates to gelled particles having a largest dimension of more than 0.1 $\mu$m which are coated with hydrophobin.

In a second aspect, the invention relates to an aerated composition, preferably a food product, comprising gelled particles having a largest dimension of more than 0.1 $\mu$m which are coated with hydrophobin.

In a third aspect, the invention relates to an aeratable composition comprising gelled particles having a largest dimension of more than 0.1 $\mu$m and less than 1 mm, preferably less than 100 $\mu$m, which are coated with hydrophobin.

In a fourth aspect the invention relates to a process for producing an aerated composition, the process comprising aerating a composition according to the third aspect of the invention.

Preferably the gelled particles are food grade.

Preferably the gelled particles comprise a gelling polysaccharide such as agar, carrageenans, pectin, alginate, gellan and / or gellable starches. More preferably, the gelled particles comprise a gelling polysaccharide such as agar, carrageenans, pectin, alginate and gellan.

Preferably the gelled particles have a largest dimension of from 0.5$\mu$m to 100 $\mu$m.

Preferably the gelled particles are coated with hydrophobin in an amount of from 0.1 to 50 wt% based on the total weight of the particles.

Preferably the hydrophobin is a class II hydrophobin, more preferably the hydrophobin is HFB II from *Trichoderma reesei*.

### Detailed Description of the Invention

*Hydrophobins*

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$$X_n\text{-C-}X_{5\text{-}9}\text{-C-C-}X_{11\text{-}39}\text{-C-}X_{8\text{-}23}\text{-C-}X_{5\text{-}9}\text{-C-C-}X_{6\text{-}18}\text{-C-}X_m \qquad \text{(SEQ ID No. 1)}$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-C-}X_{1\text{-}50}\text{-C-}X_{0\text{-}5}\text{-C-}X_{1\text{-}100}\text{-C-}X_{1\text{-}100}\text{-C-}X_{1\text{-}50}\text{-C-}X_{0\text{-}5}\text{-C-}X_{1\text{-}50}\text{-C-}X_m \qquad \text{(SEQ ID No. 2)}$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are generally relatively insoluble whereas those of class II hydrophobins readily dissolve in a variety of solvents. Preferably the hydrophobin is a class II hydrophobin. Preferably the hydrophobin is soluble in water, by which is meant that it is at least 0.1% soluble in water, preferably at least 0.5%. By at least 0.1 % soluble is meant that no hydrophobin precipitates when 0.1g of hydrophobin in 99.9 mL of water is subjected to 30,000 g centrifugation for 30 minutes at 20°C.

Hydrophobin-like proteins (e.g. "chaplins") have also been identified in filamentous bacteria, such as *Actinomycete* and *Streptomyces* sp. (WO01/74864; Talbot, 2003, Curr. Biol, 13: R696-R698). These bacterial proteins by contrast to fungal hydrophobins, may form only up to one disulphide bridge since they may have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/418 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

The hydrophobin is added in a form and in an amount such that it is available to stabilise the gas phase, i.e. the hydrophobin is deliberately introduced into the product for the purpose of taking advantage of its foam stabilising properties. Consequently, where ingredients are present or added that contain fungal contaminants, which may contain hydrophobin polypeptides, this does not constitute adding hydrophobin within the context of the present invention.

Typically, the hydrophobin is added to the product of the invention in an isolated form, typically at least partially purified, such as at least 10% pure, based on weight of solids. By "isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

*Gelled Particles*

Gelled particles can suitably be made from gelling polysaccharides, such as agar, carrageenans, pectin, alginate, gellan and gellable starches, preferably agar, carrageenans, pectin, alginate and gellan. It is also possible that mixtures of more than one polymer are used to form the gelled particles. Gelled particles usually contain a significant amount of water in addition to the polysaccharide. Particles made from gelled polysaccharides have the advantage that they are food-grade, i.e. they are suitable for use in food. This is usually defined by governmental institutes such as the FDA (Food and Drug Administration) in the USA or the WHO (World Health Organization).

Gelled particles can be produced by any suitable method, for example as follows: The polymer is dissolved, usually in water or an aqueous medium. The conditions are then controlled so that gel particles are formed from this solution. This may be achieved by using a low concentration of polymer, or by forming a complete gel network and then subsequently breaking it up, for example by shearing the gel during or after the setting process. The resulting suspension may then be centrifuged to collect the particles. For some polymers, such as kappa-carrageenan, it is possible to alter the ionic conditions to obtain gelled particles, as is well-known to persons skilled in the art.

In a preferred embodiment, the particles are made from agar, kappa-carrageenan, pectin or gellan. Agar is an unbranched polysaccharide obtained from the cell walls of some species of red algae or seaweed. It is also known as agarose, kanten or agal-agal (Ceylon agar). Chemically, agar is a polymer made up of subunits of the sugar galactose. Carrageenans are a family of linear sulphated polysaccharides extracted from red seaweeds. Pectin is a linear polysaccharide consisting of a backbone of galacturonic acid and galacturonic methyl ester units, and can be extracted from citrus peel and apple pomace. Gellan is a bacterial exopolysaccharide from *Sphingomonas elodea.*

The particles have a largest dimension of at least 0.1 $\mu$m. By largest dimension we mean the greatest straight dimension that can be measured on the particle. The dimension of the particles can be determined by any commonly known technique, such as for example electron microscopy, light scattering, or atomic force microscopy. The largest dimension of the particles is preferably at least 0.5 $\mu$m, more preferably at least 1 $\mu$m. Preferably the largest dimension of the particles is not more than 500 $\mu$m, more preferably not more than 100$\mu$m, most preferably not more than 10$\mu$m. We have found that particles of this size, when coated with hydrophobin, are most effective at producing and / or stabilizing foams.

The particles may be any shape, for example spherical, plate-like or elongated, e.g. fibres. There is no need for the particles to be uniform in shape, or for all particles to be of the same size and shape.

Hydrophobin molecules are absorbed / attached / bound onto the particles, thereby coating them. By "coated with hydrophobin", it is meant that some hydrophobin is attached to the particles, but it is not necessary that the whole surface of the particle is covered. Preferably the particles are coated with hydrophobin in an amount of from 0.1 to 50 wt%, based on the total weight of the particles, more preferably at least 0.5%, and at most 25%. Without wishing to be limited by theory, we believe that the coated particles adsorb at the surface of gas bubbles and thereby stabilize them. Since the particles are much larger than the size of the hydrophobin molecules, the particles coated with hydrophobin behave differently to the hydrophobin molecules alone. However, if the amount of hydrophobin coating the particles is too great, the benefit, compared with hydrophobin alone, is reduced. Particles made from gelled polysaccharides contain a substantial amount of water (~90-99 wt% of the particle), so it is preferred that the ratio of the amount of hydrophobin to the amount of dry polysaccharide is in the range of about 1:100 to about 5:1, preferably to about 10:1.

The means by which the hydrophobin is attached to the particle is not critical, and coating can be achieved by any suitable means, for example by means of the electrostatic attraction between the particles and the hydrophobin where the particles and the hydrophobin carry opposite net charges. For example, the particles may be negatively charged and the hydrophobin positively charged (or vice versa). The charge on the hydrophobin depends on the pH of the solution in relation to the isoelectric point of the hydrophobin. For example, the hydrophobin HFB II from *Trichoderma reesei* has an isolelectric point of pH 4.8. Below this pH, the hydrophobin molecules are positively charged and therefore are attracted to negatively charged particles, thereby coating them. The interaction between a charged particle and a hydrophobin depends on the particular hydrophobin and the nature of the particle. Under certain conditions of pH and ionic strength and depending on the particle type, the particles may become coated with too much hydrophobin. In this instance, the effectiveness of the particles is reduced, and in some cases they may be detrimental to the performance of the hydrophobin. The effectiveness of the particles may be restored by making the appropriate adjustments to the medium conditions by, for example, changing the pH and/or ionic strength in accordance with well-known principles of physical chemistry.

*Aerated and aeratable compositions*

The term "aerated composition" or "foam" in the context of the present invention means a composition into which gas has been intentionally incorporated. The term "aeratable composition" or "mix" means a composition into which gas can be incorporated, for example by whipping. The gas can be any gas, but is preferably, particularly in the context of food products, a food-grade gas such as air, nitrogen, nitrous oxide, or carbon dioxide. The extent of aeration is defined in terms of "overrun", which is defined in volume terms as % overrun =

$$[(\text{volume of aerated composition} - \text{starting volume of mix}) / \text{starting volume of mix}] \times 100$$

where the volumes of aerated composition and unaerated mix are the volumes of a fixed mass of aerated composition and starting mix, respectively.

The overrun of an aerated composition may vary depending on the desired product characteristics. Preferably the overrun is at least 10%, more preferably at least 25 or 50%. Preferably the amount of overrun is less than 400%, more preferably less than 300 or 200%. For frozen aerated confections, the overrun is most preferably from 70 to 150%. For whipped cream or non-dairy cream and related products, the overrun is most preferably from 100 to 160%.

The aerated compositions of the invention are stable, which means that they keep their form and properties over time. Foam stability is defined in terms of the percentage of the initial overrun that remains at a given time after aeration.

A further embodiment of the present invention is an aeratable composition comprising particles as defined above. Aeratable compositions within the scope of this invention comprise water and optionally an emulsified fat phase. Aeratable compositions include mixes which are subsequently aerated to form the final product, such as aerated desserts, mousses and frozen confections, and whipping cream or non-dairy cream.

Typically, the aerated / aeratable composition will contain at least 0.001 wt%, hydrophobin (based on the total weight of the product), preferably at least 0.005 wt%, more preferably at least 0.01, such as about 0.05 wt%. Typically the product will contain less than 1 wt% hydrophobin, more preferably less than 0.1 wt%. We have found that when the coated particles are used to create and stabilize foams, the amount of hydrophobin required is reduced. The hydrophobin can be from a single source or a plurality of sources e.g. a mixture of two or more different hydrophobins.

Typically, the aerated / aeratable composition will contain at least 0.1 wt%, particles (based on the total weight of the product), preferably at least 0.5 wt%, such as about 1 wt%. Typically the composition will contain less than 10 wt% particles, more preferably less than 5 wt%.

The aerated and aeratable compositions of the invention comprise water. The water content can vary (depending on the level of the other ingredients), and is typically 5 - 99.5 wt%, based on the total weight of the product, preferably 20 - 95 wt%.

The aerated and aeratable compositions of the invention may comprise oil/fat. Suitable oils/fats include coconut oil, corn oil, cottonseed oil, canola oil (rapeseed oil), olive oil, palm oil, peanut oil (ground nut oil), safflower oil, sesame oil, soybean oil, sunflower oil, butterfat and fish oils (for example cod liver oil). Furthermore, the aerated and aeratable compositions may comprise other ingredients. Commonly used ingredients for food products are emulsifiers, flavourings, colouring agents, preservatives, proteins such as dairy proteins or soy protein; sugars e.g. sucrose, fructose, dextrose, lactose, corn syrups, sugar alcohols; fruit or vegetable purees, extracts, pieces or juice; and stabilisers or thickeners, such as polysaccharides, e.g. locust bean gum, guar gum. Aeratable compositions may include all of the remaining ingredients required to make the food product such that the composition is ready to be aerated to form an aerated product.

The aerated and aeratable compositions of the invention can be products which are normally stored and / or served at room temperature (ambient products), chill temperature (e.g. about 4°C) or frozen (below 0°C, typically at about -18°C). In one particularly preferred embodiment the aerated composition is a frozen aerated confection such as ice cream or frozen yoghurt. In another embodiment, the composition is a mousse, whipped cream or non-dairy cream.

The aerated composition according to the present invention can be produced from an aeratable composition by any suitable aeration process, such as whipping, sparging, etc..

The present invention will now be described further with reference to the following nonlimiting examples. If not otherwise stated the percentages are based on weight.

**Example 1: Preparation of agar particles**

Deionised water was heated to above 95°C and kept covered in order to avoid evaporation. 0.05% agar powder (Luxara 1253 from Arthur Branwell) was added slowly and allowed to dissolve. The solution was then heated for at least 30mins to ensure that the agar had fully dissolved. The mixture was then cooled to chill temperature (around 5°C) and stored for a minimum of 24 hours so that the agar gelled. Because the agar concentration was low, a continuous gel network was not able to form, and instead gel particles resulted. The particles were collected by centrifuging at 60000 rpm (Beckman L8-M ultracentrifuge) for 30min at 20°C in an 8 x 50cm$^3$ Ti70 L8-70M rotor. 500 cm$^3$ of starting solution (i.e. containing 0.25g of agar) yielded approximately 2.5-3 g of particles. The water content of the particles was approximately 92%.

The particles recovered by centrifugation were redispersed to make up a 2 wt% agar particle suspension in de-ionised water according to two different methods:

a) gentle redispersion: a magnetic flea was placed into the suspension, and it was mixed for 48 hr using a flask rotator at medium speed. Microscopy showed that this resulted in polydispersed, generally plate-like particles with largest dimensions ranging from ~ 0.5 - 100 $\mu$m

b) redispersion by ultrasonication: 15ml of solution was redispersed by means of a Branson ultrasonic probe for 2 minutes at 20% amplitude. Microscopy of the particles showed individual fibrils and clumps of fibrils of the order of 5nm thick, with largest dimensions of approximately 0.5 - 2 $\mu$m.

**Example 2: Preparation of foams**

Hydrophobin HFBII was obtained from VTT Biotechnology, Finland. It had been purified from *Trichoderma reesei* essentially as described in WO00/58342 and Linder et al., 2001, Biomacromolecules 2: 511-517. Solutions of HFB II in 0.05M citric acid were prepared, and each was mixed with an equal volume of the agar particle suspension prepared in example 1a). The resulting solutions had HFB concentrations of 0.005, 0.01 and 0.04 wt% and pHs of about 2.4. The mixtures (starting volume 40cm$^3$) were aerated for one minute with an electric hand whisk, and the volume of the resulting foams were measured. Hydrophobin solutions containing no agar particles were also aerated in the same manner. Table 1 shows the amount of overrun as a function of hydrophobin concentration, with and without agar particles.

**Table 1**

| HFB concentration | T = 0 | | After 1 day storage | |
|---|---|---|---|---|
| | Overrun - no particles (%) | Overrun - with particles (%) | Overrun - no particles (%) | Overrun - with particles (%) |
| 0.005 | 20 | 65 | 10 | 50 |
| 0.01 | 30 | 140 | 15 | 130 |
| 0.04 | 245 | 235 | 210 | 200 |

Table 1 shows that, in the absence of the agar particles, a good overrun was achieved with 0.04% hydrophobin, but at hydrophobin levels of 0.005% and 0.01% hydrophobin the overrun was small. However, in the presence of the particles, a good overrun was produced with hydrophobin levels as low as 0.005%. (The maximum overrun obtainable was limited by the size of the container in which the solutions were aerated, which explains why there is little difference between the overruns obtained with and without particles at 0.04% HFB). These results show that the addition of agar particles has increased the amount of foam produced at the lower concentrations of hydrophobin.

Table 1 also shows how the overrun changes after storage for 1 day at chill temperature. The foams stabilised with agar particles plus 0.005 or 001% of hydrophobin retained more volume, i.e. the foams were more stable, than the foams where particles were not present.

Cryo-scanning electron microscopy images of the surface of a gas bubble in a foam made from 0.03% hydrophobin in the presence of 1% agar particles prepared by the method described in example 1a) indicated that agar particles were present at the liquid / gas interface.

**Example 3: Preparation of particles and foams without centrifugation**

An agar solution was prepared as described in example 1, except that no further processing was carried out on the particles after chill storage. HFB II solutions were prepared, mixed with these particles (final HFB concentration 0.005 and 0.01 wt%) and aerated as described in example 2 (starting volume 20cm$^3$). The results are shown in Table 2. At 0.005% and 0.01% hydrophobin, only a small overrun was produced. However, in the presence of the agar particles, the overrun was similar to that produced by HFB alone at a concentration of 0.03%. Thus the addition of agar particles allows an approximately six fold reduction in the amount of hydrophobin that is required to produce a given volume of foam. The foam volumes were also recorded after storage for 1 month storage at chill temperature, and it was found that the volume had not decreased significantly, i.e. the foam remained stable.

**Table 2**

| HFB concentration (wt%) | Overrun - no particles (%) | Overrun - with particles (%) |
|---|---|---|
| 0.005 | 20 | 55 |
| 0.005 1 month storage | 15 | 50 |
| 0.01 | 35 | 75 |
| 0.03 | 60 | |

**Example 4: Sheared gel particles**

Deionised water was heated to above 95°C and kept covered in order to avoid evaporation. To the hot water 2% agar powder was added slowly and allowed to dissolve. The solution was then heated for at least 30mins to ensure that the agar had dissolved fully. The solution was cooled to room temperature to allow the gel to form. 2g of this gel was poured into 100ml of deionised water and broken up by use of a Silverson device (general purpose disintegrating head, 20 seconds). Light microscopy showed that this resulted in the formation of polydisperse particles with largest dimensions of from about 0.5 to 300 μm. HFB II solutions (0.005 wt%) were prepared, mixed with these particles and aerated as described in example 2 (starting volume 20cm$^3$). Again, more foam was produced in the presence of the agar particles (see Table 3).

**Example 5: Gellan particles**

Gellan (Kelcogel F from CP Kelco) particles were prepared using the methods described in (a) example 3 and (b) example 4, using the same polymer concentrations. HFB II solutions (final concentration 0.005%) in citric acid were prepared, mixed with these particles and aerated as described in example 2 (starting volume 20cm$^3$). Again, more foam was produced in the presence of gellan particles (see Table 3).

**Example 6: Pectin particles**

Deionised water was heated to above 95°C and kept covered in order to avoid evaporation. To the hot water 0.5% low-methoxy pectin powder (Genu pectin LM101 DE 36 from CP Kelco) was added slowly and allowed to dissolve. The solution was then heated for at least 30mins to ensure that the pectin had dissolved fully. The mixture was then cooled to chill temperature (around 5°C) and poured into a 1% $CaCl_2$ solution. 2g of gel was recovered and poured into distilled water. Since pectin gel breaks up easily, the solution was simply shaken vigorously to form pectin gelled particles. HFB II solutions (final concentration 0.005 wt%) in citric acid were prepared, mixed with the particles and aerated as described in example 2 (starting volume 20cm$^3$). Again, more foam was produced in the presence of the pectin particles (see Table 3).

**Example 7: κ-carrageenan particles**

a) Particles prepared using the method of example 3: Deionised water was heated to above 95°C and kept covered in order to avoid evaporation. To the hot water 0.05% κ-carrageenan powder (Code: X6960 from Hercules) and 0.05M KCl were added slowly and allowed to dissolve. The solution was then heated for at least 30mins to ensure that the κ-carrageenan had fully dissolved. The mixture was then cooled to chill temperature (around 5°C) for a minimum of 24 hours. The sample was stored at chill temperature until required. No further processing was carried out on the particles.

b) Particles prepared using the method of example 4: Deionised water was heated to above 95°C and kept covered in order to avoid evaporation. To the hot water 2% κ-carrageenan powder and 2M KCl were added slowly and allowed to dissolve. The solution was then heated for at least 30mins to ensure that the κ-carrageenan had fully dissolved. The solution was cooled to chill temperature (around 5°C) to allow the gel formation. 2g of this gel was poured into 100ml of deionised water and broken up by use of a Silverson device (general purpose disintegrating head, 20 seconds).

HFB II was dissolved in a buffer solution of sodium citrate and citric acid. The HFB II solutions were mixed with the suspensions of κ-carrageenan to give a final HFB concentration of 0.005 wt% and a pH of 3.8, and then aerated as described in example 2 (starting volume 20cm$^3$). Again more foam was produced in the presence of κ-carrageenan particles (made by either method) than in their absence (see Table 3).

**Table 3**

| Particle type | Overrun - no particles (%) | Overrun - with particles (%) |
|---|---|---|
| Agar sheared gel | 10 | 25 |
| Gellan weak gel | 15 | 35 |
| Gellan sheared gel | 15 | 35 |
| Low methoxy pectin | 20 | 45 |
| κ-carrageenan weak gel | 10 | 25 |
| κ-carrageenan sheared gel | 10 | 20 |

## Example 8: Effect of pH

Example 3 (0.005wt% HFB) was repeated, except that the pH was varied: 2.4, 3.4, 4.0, 4.4 and 6.2. At pHs below the isoelectric point of HFB II (pH 4.8) the overrun was greater when agar particles were present. However, at pH 6.2, above the isoelectric point, there was no difference in overrun between the samples with and without agar particles. This is due to the fact that when the pH is above the isoelectric point, the hydrophobin is not able to coat the particles, since it is also negatively charged.

The various features and embodiments of the present invention, referred to in individual sections above apply, as appropriate, to other sections, mutatis mutandis. Consequently features specified in one section may be combined with features specified in other sections, as appropriate. Various modifications and variations of the described products and methods of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

## Example 9

Two solutions consisting of 0.05% agar solution in 25 mM citric acid were prepared by the method described in example 3. The agar solution was mixed with an equal volume of either 0.04% or 0.08% hydrophobin solution in 25mM citric acid. The mixes were then aerated using the method described in Example 2. The aeration time was 1 min. The over-run of the foamed solution was recorded. These data are shown in Table 4.

Table 4: Comparison of overruns for hydrophobin foams made with and without agar in 25mM citric acid.

| HFBII conc. | Agar conc. | Overrun (%) |
|---|---|---|
| 0.02% | 0% | 10 |
| 0.02% | 0.025% | 25 |
| 0.04% | 0% | 40 |
| 0.04% | 0.025% | 250 |

The foams (including the un-foamed liquid) were then incorporated gently into an equal weight of 20% skimmed milk powder (SMP), 40% Sucrose and 0.8% xanthan solution. After incorporation into the SMP/sucrose/xanthan mix the agar containing samples still had higher over-run than their respective controls.

The foams produced also showed good stability to storage at chill temperatures.

### Example 10

Hydrophobin/particle foams could be used in mayonnaise as a fat replacement to create a low-fat mayonnaise with creamy attributes The process consisted of making a foam from 0.05% HFBII + 0.05% agar in 25mM citric acid solution (using a similar method to that described in example 10) and then incorporating the foam into the mayonnaise by gentle mixing using a Hobart mixer. Final products were weighed out to check the final amount of foam contained in the mayonnaise. Hydrophobin-agar foams support quite well the incorporation process since initial foam volumes of 10% and 15% incorporated lead to final products containing 7% and 10% of foam, which is comparable to pure hydrophobin performance. However the amount of hydrophobin required to make 500 ml of 10% aerated mayonnaise can be reduced by up to 7 times by addition of 0.025% agar.

### Example 11: Preparation of a "sorbet-type" product.

A sorbet product was prepared in the following manner. A sheared agar gel was prepared using the method described in Example 4. Two mixes were then prepared. One mix comprised a solution of 0.025% hydrophobin in 0.2% citric acid and 25% sucrose. This was the control mix. The second mix contained 0.025% hydrophobin, 0.2% citric acid, 25% sucrose and 1% of the sheared gel particles. This was the test mix. The mixes were foamed using the method described in example 2. The foaming time employed was 3 minutes. The over-runs achieved for the two sets of mixes are shown in Table 5

Table 5: Over-runs for the foams prepared in example 11

| HFBII conc. (%) | Agar particle conc (%). | Overrun (%) |
|---|---|---|
| 0.025 | 0 | 116 |
| 0.025 | 1 | 129 |

A higher over-run was achieved for the test mix.

The mixes were shear frozen using the following method. Mix at low speed for 1 minute, mix at high speed for 1 minute, switch on the cooling supply and continue to mix at high speed for a further 3 minutes. Finally mix at low speed until the product has achieved a temperature of -5°C to -6°C. Record the weight of a know volume of frozen product.. The final over-runs achieved in example 11 are shown in table 6

Table 6: Final over-runs for the frozen foams prepared in example 11

| HFBII conc. (%) | Agar particle conc (%). | Overrun (%) |
|---|---|---|
| 0.025 | 0 | 49.7 |
| 0.025 | 1 | 68.7 |

Data in Table 6 show that higher over-runs can be achieved for a frozen product containing hydrophobin plus agar particles

### Claims

1. Gelled particles having a largest dimension of more than 0.1 $\mu$m and less than 1 mm which are coated with hydrophobin.

2. Particles according to claim 1 which are food grade.

3. Particles according to claim 1 or claim 2 which comprise agar, carrageenans, pectin, alginate, and gellan.

**4.** Particles according to any of claims 1 to 3 which have a largest dimension of from 0.5µm to 100 µm.

**5.** Particles according to any of claims 1 to 4, which are coated with an amount of from 0.1 to 50 wt% of hydrophobin, based on the total weight of the particles.

**6.** Particles according to any of claims 1 to 5 wherein the hydrophobin is a class II hydrophobin.

**7.** Particles according to any of claims 1 to 6 wherein the hydrophobin is HFB II from *Trichoderma reesei.*

**8.** An aerated composition comprising particles according to any of claims 1 to 7.

**9.** An aerated composition according to claim 8 which contains less than 0.1 wt% hydrophobin, based on the total weight of the composition.

**10.** An aerated composition according to claim 8 or 9 which contains from 0.1 to 10 wt% particles, based on the total weight of the composition.

**11.** An aerated composition according to any of claims 8 to 10 which is a food product.

**12.** An aeratable composition comprising particles according to any of claims 1 to 7.

**13.** A process for producing an aerated composition, the process comprising aerating a composition according to claim 12.

**Patentansprüche**

**1.** Gelierte Partikel, die eine größte Abmessung von mehr als 0,1 µm und weniger als 1 mm haben, die mit Hydrophobin beschichtet sind.

**2.** Partikel gemäß Anspruch 1, die Lebensmittelqualität haben.

**3.** Partikel gemäß Anspruch 1 oder Anspruch 2, die Agar, Carrageenane, Pektin, Alginat und Gellan umfassen.

**4.** Partikel gemäß einem der Ansprüche 1 bis 3, die eine größte Abmessung von 0,5 µm bis 100 µm haben.

**5.** Partikel gemäß einem der Ansprüche 1 bis 4, die mit einer Menge von 0,1 bis 50 Gew.-% Hydrophobin, bezogen auf das Gesamtgewicht der Partikel, beschichtet sind.

**6.** Partikel gemäß einem der Ansprüche 1 bis 5, wobei das Hydrophobin ein Klasse II-Hydrophobin ist.

**7.** Partikel gemäß einem der Ansprüche 1 bis 6, wobei das Hydrophobin HFB II aus *Trichoderma reesei* ist.

**8.** Aufgeschäumte Zusammensetzung, umfassend Partikel gemäß einem der Ansprüche 1 bis 7.

**9.** Aufgeschäumte Zusammensetzung gemäß Anspruch 8, die weniger als 0,1 Gew.-% Hydrophobin, bezogen auf das Gesamtgewicht der Zusammensetzung, enthält.

**10.** Aufgeschäumte Zusammensetzung gemäß Anspruch 8 oder 9, die 0,1 bis 10 Gew.-% Partikel, bezogen auf das Gesamtgewicht der Zusammensetzung, enthält.

**11.** Aufgeschäumte Zusammensetzung gemäß einem der Ansprüche 8 bis 10, die ein Nahrungsmittelprodukt ist.

**12.** Aufschäumbare Zusammensetzung, die Partikel gemäß einem der Ansprüche 1 bis 7 umfasst.

**13.** Verfahren zur Herstellung einer aufgeschäumten Zusammensetzung, wobei das Verfahren Aufschäumen einer Zusammensetzung gemäß Anspruch 12 umfasst.

**Revendications**

1. Particules gélifiées ayant une dimension la plus grande supérieure à 0,1 μm et inférieure à 1 mm, qui sont revêtues avec de l'hydrophobine.

2. Particules selon la revendication 1, qui sont de qualité alimentaire.

3. Particules selon la revendication 1 ou la revendication 2, qui comprennent de l'agar agar, des carraghénanes, de la pectine, de l'alginate et de la gellane.

4. Particules selon l'une quelconque des revendications 1 à 3, qui ont une dimension la plus grande de 0,5 μm à 100 μm.

5. Particules selon l'une quelconque des revendications 1 à 4, qui sont revêtues avec une quantité de 0,1 à 50 % en poids d'hydrophobine, sur la base du poids total des particules.

6. Particules selon l'une quelconque des revendications 1 à 5, dans lesquelles l'hydrophobine est une hydrophobine de classe II.

7. Particules selon l'une quelconque des revendications 1 à 6, dans lesquelles l'hydrophobine est HFBII de *Trichoderma reesei.*

8. Composition aérée comprenant des particules selon l'une quelconque des revendications 1 à 7.

9. Composition aérée selon la revendication 8, qui contient moins de 0, 1 % en poids d'hydrophobine, sur la base du poids total de la composition.

10. Composition aérée selon la revendication 8 ou 9, qui contient de 0,1 à 10 % en poids de particules sur la base du poids total de la composition.

11. Composition aérée selon l'une quelconque des revendications 8 à 10, qui est un produit alimentaire.

12. Composition pouvant être aérée comprenant des particules selon l'une quelconque des revendications 1 à 7.

13. Procédé pour produire une composition aérée, le procédé comprenant l'aération d'une composition selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1626361 A
- WO 0174864 A
- WO 96418 A
- WO 0157076 A
- WO 0058342 A

### Non-patent literature cited in the description

- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **LINDER et al.** *Biomacromolecules,* 2001, vol. 2, 511-517